# EUROPEAN PATENT APPLICATION

(11) **EP 3 608 479 A2**
(43) Date of publication of application: **12.02.2020**
(21) Application number: 19191133.8
(22) Date of filing: 09.08.2019
(51) Int. Cl.: E03F 1/00

(54) **STORMWATER CHAMBERS THERMOFORMED FROM COEXTRUDED SHEET MATERIAL**

(30) Priority: 10.08.2018 US 201816100916
(71) Applicant: Cultec, Inc., Brookfield, CT 06804 (US)
(72) Inventor: DiTullio, Robert J., Brookfield, CT Connecticut 06804 (US); Herlache, Russel L., Freeland, MI Michigan 48623 (US)
(74) Representative: Habermann, Hruschka & Schnabel

(57) **Abstract**

A thermoformed arch-shaped plastic storm water chamber (10) has an exterior surface formed of first layer (202) having an increased reflectance additive and an interior surface formed of a second layer (204). The increased reflectance additive is a pigment (other than a black pigment) or may be a mineral component. Optionally, a supplemental ultraviolet and/or antioxidant protection additive is also provided in the first layer. The thickness of the first layer is less than the thickness of the second layer, optionally in a 20%/80% of total thickness ratio. The two layers may be made from the same or different HDPE or blends thereof.

## Description

### FIELD OF THE INVENTION

This application relates generally to molded plastic chambers for water detention and, more particularly to an open bottomed, arch-shaped molded plastic chambers that are buried in the ground to either receive storm water runoff or be used in a septic system.

### BACKGROUND OF THE INVENTION

Storm water runoff was historically directed into municipal storm water drainage systems and released into a local body of water. However, regulatory changes now mandate that storm water runoff must be collected and directed to local soil where it can replenish groundwater supplies.

The traditional construction of these water handling systems has included the use of concrete tanks and / or perforated pipes running through infiltration trenches filled with relatively large pieces of gravel or crushed stone. However, these stone-filled trench systems are expensive and labor intensive to install. Additionally, stone-filled trenches are very inefficient as the stone occupies a substantial volume of the trench, which severely limits the capacity of the system to handle relatively large surge volumes associated with heavy storms. Likewise, both the stone and the perforated pipe are susceptible to clogging due to, for example, particles or debris carried by water during intense storms.

Molded plastic chamber structures were introduced to the market to take the place of concrete structures for water handling. U.S. Patent No. 5,087,151 to Robert J. DiTullio describes an early water handling system that utilizes vacuum-molded polyethylene chambers that are designed to be connected and locked together in an end-to-end fashion to provide a buildable water handling system.

Water detention chambers are typically provided with a corrugated arch-shaped cross-section and may be formed relatively long with open bottoms for dispersing water to the ground. The chambers are typically buried within crushed stone aggregate or other water permeable granular medium that typically has 20-40 percent or more void space. The chambers serve as water reservoirs in a system that includes both the chambers and surrounding crushed stone. The crushed stone is located beneath, around, and above the chambers and acts in combination with the chambers to provide paths for water to percolate into the soil, and also provides a surrounding structure that bears the load of any overlying materials and vehicles. The chambers will usually be laid on a crushed stone bed side-by-side in parallel rows, then covered with additional crushed stone to create large drainage systems. End portions of the chambers may be connected to a catch basin, typically through a pipe network, in order to efficiently distribute high velocity storm water. Examples of such systems are illustrated in U.S. Patent Nos. 7,226,241 and 8,425,148 to Robert J. DiTullio.

These types of chambers have had great success and have become a standard in the industry due to the ease of installation and high quality of the finished systems. One of the key concerns in the installation of these types of systems is maintaining the integrity of the chambers to avoid being crushed, which would result in the loss of the interior space of the chamber for handling large volumes of run off during intense storm conditions. Some techniques that have been used include use of rib systems to improve strength such as is disclosed in U.S. Patent No. 9,765,509.

Chambers have typically been formed by vacuum forming sheets of high density polyethylene (HDPE) or by injection molding polypropylene.

High density polyethylene (HDPE) and products fabricated therefrom will degrade when exposed to ultraviolet light, heat, and ozone. The degraded polymer will suffer a loss of elasticity and tensile strength, and in some cases may experience cracking. UV light promotes free radical oxidation of the surface. Heat accelerates the process of oxidation and the effects of oxidation can be observed sooner and are more severe as the temperature increases. Since HDPE can become brittle when exposed to sunlight, so carbon black is usually included in the polyethylene sheet material as a UV stabilizer.

A significant problem with conventional carbon black HDPE chambers is heating from solar radiation. During summer months, and in southern latitudes, where there are both high ambient temperatures, and more intense sunlight, black HDPE chambers left in direct sunlight can become overheated. For example, during the hot summer months when much construction activity is typical, storm water detention chambers may be loaded on a trailer to be shipped to a job location, then unloaded to sit for prolonged periods of time in the direct sun prior to installation.

Polyethylene, a thermoplastic material, will become more pliable as the temperature of the material rises. Black HDPE chambers sitting in direct sunlight absorb solar radiation and sometimes become excessively pliable such that if they are loaded / unloaded / moved, they will be deformed or otherwise damaged. Overheated chambers may deform either due to stress while being moved, or as a consequence of installation of crushed rock around and on the chambers.

Therefore, there is a need in the storm water management field for a thermoplastic chamber system that is resistant to the effects of intense sunlight such that the chambers retain their rigidity even when exposed to solar radiation for prolonged periods of time.

### SUMMARY OF THE INVENTION

Accordingly, it is an object of the present invention to provide a storm water chamber that is resistant to the heating effects associated with solar radiation.

It is a further object of the present invention to provide such a storm water chamber that remains sturdy and rigid even if exposed to direct sunlight for prolonged periods of time.

It is a yet another object of the present invention to provide such a storm water chamber that reflects solar radiation and has a reduced absorption of solar radiation as compared to conventional storm water chambers.

These and other objectives are achieved by providing an arch-shaped corrugated chamber that is formed from a vacuum-molded polyethylene sheet where the sheet is formed of a first layer provided with an increased reflectance additive that is bonded to a second layer. The first layer having an increased reflectance additive forms an exterior surface of the corrugated chamber and the second layer forms an interior surface of the corrugated chamber. The first and second layers are formed of a HDPE resin or a blend of HDPE resins.

A method of manufacturing a water management system is provided, comprising steps of forming a first layer of material with an increased reflectance additive and a second layer of material and joining them together, then vacuum-molding the sheet of material to form a chamber having an elongated body with an arch-shaped configuration. The first and second layers are formed of a HDPE resin or a blend of HDPE resins.

Other objects of the invention and its particular features and advantages will become more apparent from consideration of the following drawings and accompanying detailed description.

### BRIEF DESCRIPTION OF THE DRAWINGS

FIG. 1 is an illustration of a chamber structure.
FIG. 2 is an illustration of a connection chamber.
FIG. 3 is an illustration of how the connection chamber of FIG. 2 is connected to the chamber structure of FIG. 1.
FIG. 4 is an illustration according to FIG. 3 of the connection chamber coupled to the chamber structure.
FIG. 5 is illustrates a cross-sectional view of the sheet material that is used in forming the chamber structure and the connection chamber.
FIG. 6 is another illustration of a chamber structure.

### DETAILED DESCRIPTION OF THE INVENTION

Referring now to the drawings, wherein like reference numerals designate corresponding structure throughout the views.

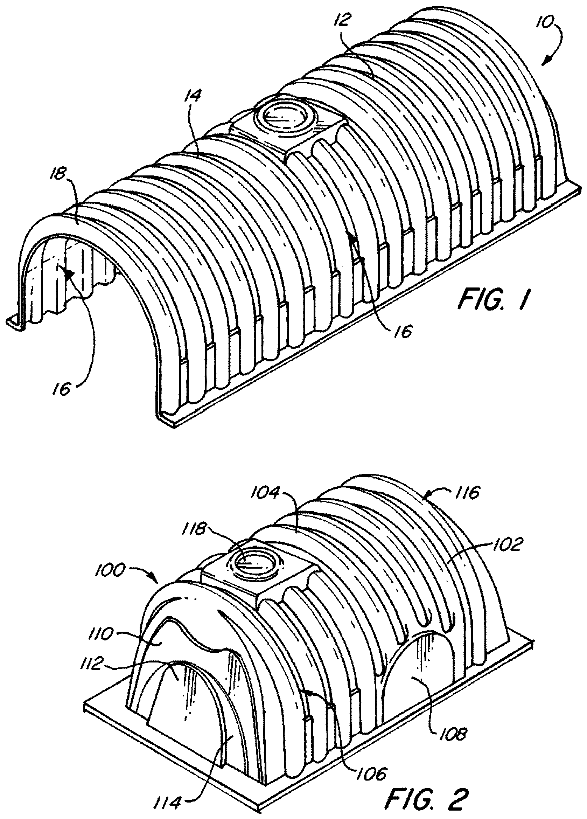

FIG. 1 is an illustration of a molded chamber structure 10 generally comprising an arch-shaped body portion 12 that includes a plurality of upstanding corrugations 14. The body portion 12 is provided with an open bottom such that side walls 16 are configured to rest on the surface of the bed of materials. Molded chamber structure 10 may be provided with a starting rib 18, which is designed to mate with end rib 116 on connection chamber 100 (FIG. 2). Molded chamber structure 10 typically comprises, for example, a vacuum-molded high density polyethylene (HDPE) chamber.

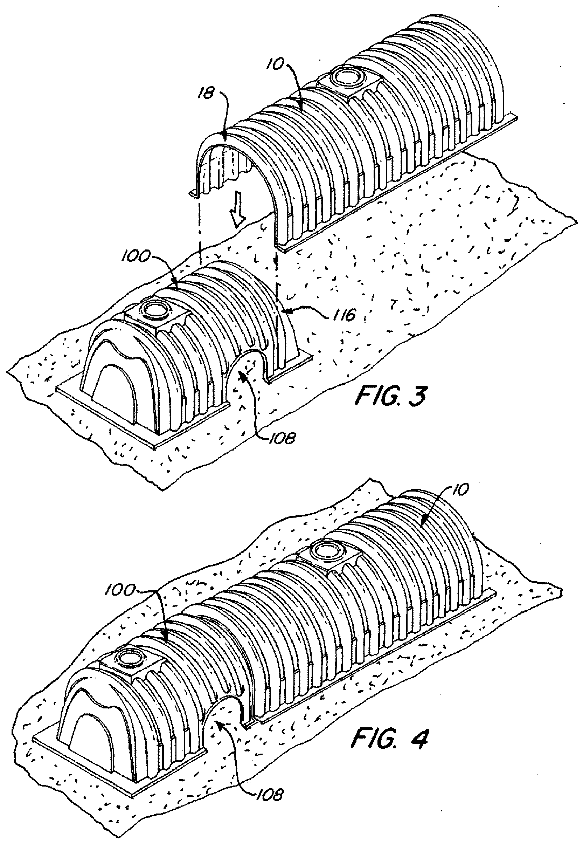

FIG. 2 illustrates a molded connection chamber 100 comprising an arch-shaped body 102 including a plurality of upstanding corrugations 104. Connection chamber 100 also comprises side walls 106, which extend downward to rest on the surface of the bed of materials having an open bottom. Provided at a lower portion of side wall 106 is arch-shaped cut out 108 that may be formed as a relatively flat pre-formed section to be optionally removed by a user. End wall 110 may be integrally molded with arch-shaped body 102, or alternatively, may be provided as a removable wall section. A relatively small arch-shaped cut out 112 may be provided at a lower end of end wall 110, or a relatively large arch-shaped cut out 114 may be provide at a lower end of end wall 110. An inspection port 118 may further be provided on an upper surface of arch-shaped body 102. The inspection port 118 is provided such that a user may visually inspect the interior of the connection chamber 100 and correspondingly coupled molded chamber structures 10. End rib 116 is located at one end of arch-shaped body 102 being provided as a smaller rib than that plurality of upstanding ribs 104. In this manner, end rib 116 may be mated with starting rib 18 provided on molded chamber structure 10. Connection is relatively simple and quick. The molded chamber structure 10 may simply be dropped down over connection chamber 100 as shown in FIG. 3, to form a chamber row (FIG. 4) .

While connection chamber 100 is illustrated connected to one end of molded chamber structure 10, it is contemplated that it may be positioned anywhere along the length of the row and that multiple connection chambers 100 may be utilized in a single row to facilitate the free movement of fluid throughout the field.

Conventionally, HDPE chambers fabricated according to ASTM Standard F2922-13 are vacuum thermoformed from extruded HDPE sheets formed from HDPE resins that include a carbon black additive. The carbon black additive acts as a pigment, a conductive filler material, a particulate reinforcement, and an ultraviolet light (UV) absorber. In the present invention, the amount of carbon black additive is significantly reduced or omitted from the HDPE sheet forming the chamber, and is replaced with an additive or plurality of additives that provide the chamber with UV protection, antioxidant protection, and a higher reflectance than a HDPE/carbon black chamber. As used herein, the term "increased reflectance additive" means any additive which provides an HDPE sheet material with a greater reflectivity of solar radiation than conventional HDPE with carbon black as an additive.

A chamber fabricated from an HDPE sheet material having an increased reflectance additive will exhibit greater reflectance and less absorption of solar radiation, and thus will experience less solar heating of the chamber, and this a reduced likelihood of unintended deformation or buckling of the chamber.

In preferred embodiments of the invention, the HDPE sheet material used to form a chamber is a multilayer sheet in which an external HDPE layer is provided with an increased reflectance additive while one or more inner HDPE layers are conventional HDPE with carbon black as an additive.

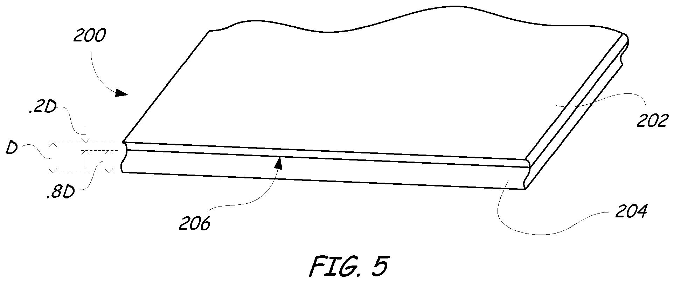

Turning now to FIG. 5 a cross section of a HDPE sheet 200 is provided. The sheet 200 is co-extruded and includes a first layer 202 and a second layer 204. The first layer 202 is bonded to second layer 204 at a joint 206. The sheet 200 may then be used in a vacuum-molding process that forms chamber structure 10 or connection chamber 100 in a mold.

The first layer 202 constitutes the upper surface or exterior surface of a chamber such as chamber structure 10 or connection chamber 100. The first layer 202 is provided with an increased reflectance additive. The increased reflectance additive provides the first layer 202 with a greater reflectance of solar radiation than typical black HDPE, to reduce the absorption of solar radiation which contributes to overheating of chambers. The increased reflectance additive desirably also provides ultraviolet and/or antioxidant protection to the first layer 202. Alternatively, supplemental additives may be used to provide ultraviolet and/or antioxidant protection to the first layer 202. Supplemental antioxidant / ultraviolet (AO/UV) protective additives may include paracrystalline carbon such as carbon black, amines, phenolic and/or phosphates and/or thioesters.

Color pigments, other than carbon black (or other black pigments), such as those listed below may be used in as an increased reflectance additive.

| Pigment* | Composition | TSR** |
|---|---|---|
| Blue 424 | CoAl | 42% |
| Yellow 10P110 | NiSbTi | 69% |
| Orange 10P225 | CrSbTi | 63% |
| Green 223 | CoNiZnTi | 25% |
| Brown 10P850 | MnSbTi | 35% |

| | | |
|---|---|---|
| (*Pigment Product Codes of The Shepherd Color Company [see https://www.shepherdcolor.com/]). (**Total Surface Reflectance - which is the percentage of the total solar energy reflected by the pigment). | | |

In one embodiment, color pigments are provided to the resin(s) used to make the layer 202 in the form of color concentrates or liquid color is added to the resin used to form first layer 202.

In one embodiment, color pigments are provided to the resin(s) used to make the layer 202 according to the process described in U.S. Patent No. 9,969,881.

Increased reflective additives which are specifically formulated to reflect infrared radiation is particularly effective. Such infrared reflecting additives may include mixed metal oxides (MMO) or complex inorganic colored pigments (CICP).

Other increased reflective additives may include reflective mineral components such as fumed silica or ultra-fine calcined alumina or borosilicate glass. Other reflective additives may include metalized films.

In other embodiments, the desired increased reflectance is achieved by the use of coatings applied to the first layer 202.

The second layer 204 constitutes the lower surface or interior surface of the chamber such as chamber structure 10 or connection chamber 100 and is a conventional HDPE materials with carbon black as an additive.

The relative thickness of the first layer 202 and the second layer 204 is selected according to considerations of ease of fabrication and cost of materials. Typically the thickness of the first layer 202 will be 50% or less of the sheet 200 and the thickness of the second layer 204 will be 50% or more of the sheet 200.

In FIG. 5, the sheet of material 200 illustrates an embodiment of the invention where the first layer of material 202 comprises approximately 20% (depicted as ".2D" in FIG. 5) of a total thickness (depicted as "D" in FIG. 5) of the sheet of material 200, while the second layer of material 204 comprises approximately 80% of the total thickness D (depicted as ".8D" in FIG. 5). The 20%/80% relative thickness of the first layer 202 and the second layer 204 provides an effective solution to the issue of solar heating without excessively increasing the cost. However, other relative thicknesses may be used in accordance with the invention.

First layer 202 and second layer 204 may be formed of the same material or from different materials. First layer 202 and second layer 204 may be composed of one or more resins, and may have the same or different compositions. In many embodiments, HDPE is used for both the first layer 202 and second layer 204. In a preferred embodiment, first layer 202 and second layer 204 are formed from a blend of resins.

Appropriate resins for use in first layer 202 and second layer 204 are Marlex® High Density Ethylene Hexene Copolymer resins distributed by the Chevron Phillips Chemical Company LP (CPChem). Marlex® 5502 HDPE has the following properties: density 0.955 g/cm³, tensile yield strength 28 MPa, flexural modulus 1,378 MPa. Marlex® 50100 HDPE has the following properties: density 0.948 g/cm³, tensile yield strength 25 MPa, flexural modulus 1,200 MPa.

The Marlex® 5502 HDPE has a greater density, a greater tensile yield strength and a greater flexural modulus than the Marlex® 50100 HDPE. However, chambers made with the Marlex® 50100 have a greater impact strength than the Marlex® 5502 HDPE, and therefore Marlex® 50100 HDPE would be assumed to be a preferable resin for use in chamber applications.

Surprisingly however, it has been found that a blend of Marlex® 5502 HDPE and Marlex® 50100 HDPE resins results in a HDPE sheet material having a higher impact strength than a HDPE sheet material made using either resin by itself. The blend of the two resins results in thermoformed chambers with increased stiffness compared to either resin by itself. The chamber stiffness is further improved by the co-extrusion of first layer 202 and a second layer 204 and bonding them together. During preliminary arch compression tests conducted generally in accordance with ASTM Standard F2922-13, Section 6.2.9, a sample of a thermoformed chamber made from a blend of Marlex® 5502 HDPE and Marlex® 50100 HDPE resins demonstrated greater strength than a sample of a thermoformed chamber made with the Marlex® 50100 material alone.

In one embodiment, the blend can comprise approximately 50% Marlex® 50100 and approximately 50% Marlex® 5502.

If consistency of mechanical properties throughout the thickness of the sheet 200 which forms the walls of the chamber structure 10 or connection chamber 100 is preferred or required, first layer 202 and second layer 204 will preferably both be fabricated from the same resin or resin blend. If variation of mechanical properties throughout the thickness of the sheet 200 which forms the walls of the chamber structure 10 or connection chamber 100 is preferred or required, first layer 202 and second layer 204 will preferably be fabricated from different resins or resin blends.

One embodiment of the invention that is considered to provide increased strength and reduced solar heating is a sheet 200 composition as follows:
First layer 202: 20% (of sheet 200 thickness) 50% Marlex® 50100 and 50% Marlex® 5502 blend (or their equivalents) with Carolina Colors® Process Blue with AO/UV (antioxidant/ultraviolet) package
Second layer 204: 80% (of sheet 202 thickness) 50% Marlex 50100 and 50% Marlex 5502 blend (or their equivalents) with carbon black.

Weathering tests of a prototype molded chamber has shown that 50% Marlex® 50100 and 50% Marlex® 5502 blend (or their equivalents) with Carolina Colors® Process Blue is effective for providing the level of UV and AO protection required while simultaneously maintaining the strength and other important properties needed for this particular application including superior tensile strength and flex modulus.

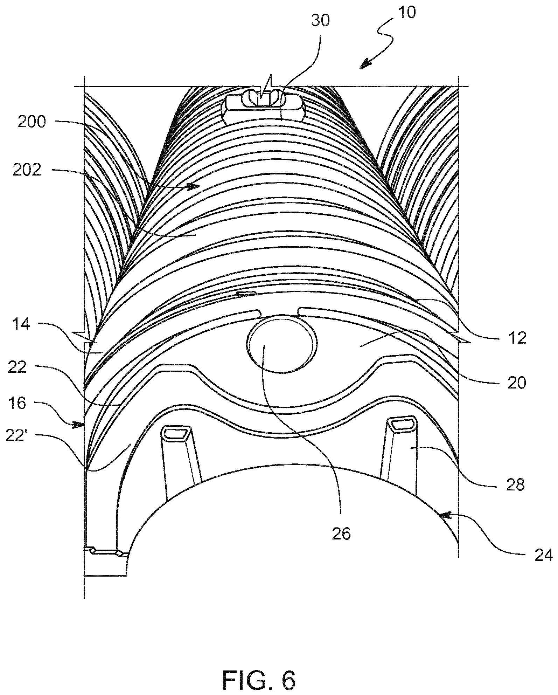

FIG. 6 illustrates a molded chamber structure 10 fabricated from a coextruded HDPE sheet 200 having a blue first layer 202 and a black second layer 204 (not shown) according to the embodiment of the invention described in the preceding two paragraphs. Chamber 10 includes an arch-shaped body portion 12 that includes a plurality of upstanding corrugations 14 where the body portion 12 is provided with an open bottom such that side walls 16 are configured to rest on the surface of the bed of materials. End wall 20 may be integrally molded with arch-shaped body portion 12 as illustrated, or alternatively, may be provided as a removable wall section. A number of pre-formed arch-shaped configurations 22, 22' maybe integrally formed into end wall 20, or a relatively large arch-shaped cut out 24 may be provide at a lower end of end wall 20. Likewise, a pre-formed cutout 26 designed to receive a pipe or other configurations, may be provided in end wall 20. Integrally pre-formed structures 28 are provided in end wall 20 to enhance structural rigidity of the end wall 20 for the arch-shaped body portion 12.

A method of making a molded chamber structure 10 includes the following steps. A first extrusion machine is loaded with an HDPE resin pellets or a blend of different HDPE resin pellets. An increased reflectance additive and any other colorants, UV stabilizers or antioxidants are added to the HDPE resin pellets or a blend of different HDPE resin pellets. The mixture to be processed is drawn into a screw extruder. The rotating screw forces the plastic pellets into a heated barrel. The pressure and friction and heat melt the plastic pellets into a molten plastic and it is extruded from a die to form a continuous web of first layer 202. Concurrently, a second extrusion machine is loaded with an HDPE resin pellets or a blend of different HDPE resin pellets. A carbon black additive is added to the HDPE resin pellets or a blend of different HDPE resin pellets. The mixture to be processed is drawn into a screw extruder. The rotating screw forces the plastic pellets into a heated barrel. The pressure and friction and heat melt the plastic pellets into a molten plastic and it is extruded from a die to form a continuous web of second layer 204. The two continuous webs of layers 202 and 204 are then directed so they are positioned one above the other, and the two continuous webs of layers 202 and 204 are fed through a pair of rollers to join the two layers together. The two joined layers 202 and 204 are typically cooled by pulling them through a set of chilled rollers. The web formed of the two joined layers 202 and 204 is then cut into appropriate size sheets 200.

A sheet 200 is then passed through a heater such as a radiant quartz heater system until the sheet 200 is in a pliable plastic state for thermoforming, the sheet is pre-stretched, then thermoformed in the cavity of a vacuum mold (with or without a male plug) into a chamber structure 10 or a connection chamber 100. During the thermoforming step, the sheet 200 is positioned so that the first layer 202 is located against the surface of the cavity of the vacuum mold and the second layer 204 is away from it, so that the finished product has the first layer 202 located on its exterior or upper surface.

Although the invention has been described with reference to a particular arrangement of parts, features and the like, these are not intended to exhaust all possible arrangements or features, and indeed many other modifications and variations will be ascertainable to those of skill in the art.

## Claims

1. A chamber comprising:
an arch-shaped plastic body having an exterior surface and an interior surface;
the exterior surface of the body being a first layer having an increased reflectance additive; and
the interior surface of the body being a second layer.

2. The chamber of claim 1, wherein the increased reflectance additive is a pigment other than a black pigment; or
wherein the increased reflectance additive is a mineral component.

3. The chamber of claim 1, wherein the first layer has a supplemental ultraviolet and/or antioxidant protection additive.

4. The chamber of claim 1, wherein the first layer and second layer are coextruded plastic layers.

5. The chamber of claim 1, wherein the first layer has a thickness, and the second layer has a thickness, and the thickness of the first layer is less than the thickness of the second layer.

6. The chamber of claim 5, wherein the body has a thickness, and the thickness of the first layer is about 20% of the thickness of the body, and the thickness of the second layer is about 80% of the thickness of the body.

7. The chamber of claim 1, wherein the first layer and the second layer comprise high density polyethylene.

8. The chamber of claim 7, wherein the first layer and the second layer comprise a same high density polyethylene resin; or
wherein the first layer and the second layer comprise different high density polyethylene resins.

9. The chamber of claim 7, wherein the first layer comprises a blend of high density polyethylene resins.

10. The chamber of claim 9, wherein the blend of high density polyethylene resins comprises a first resin having a tensile yield strength of approximately 28 MPa and a flexural modulus of approximately 1,378 MPa and a second resin has a tensile yield strength of approximately 25 MPa and a flexural modulus of approximately 1,200 MPa.

11. The chamber of claim 7, wherein the first layer and second layer are coextruded and the chamber is thermoformed in a vacuum mold.

12. A method of manufacturing a chamber, comprising steps of:
extruding high density polyethylene resin pellets or a blend of different high density polyethylene resin pellets containing an increased reflectance additive from a die to form a continuous web of a first layer;
extruding high density polyethylene resin pellets or a blend of different high density polyethylene resin pellets from a die to form a continuous web of a second layer;
joining the first layer and second layer together to form a web;
cutting the web into sheets;
heating one of the sheets until the sheet is in a pliable plastic state for thermoforming;
thermoforming in a vacuum mold, whereby the first layer is located on an exterior surface of the chamber.

13. The method of claim 12, wherein the increased reflectance additive is a pigment other than a black pigment; or
wherein the increased reflectance additive is a mineral component.

14. The method of claim 12, wherein a supplemental ultraviolet and/or antioxidant protection additive is added to the high density polyethylene resin pellets or a blend of different high density polyethylene resin pellets which form the first layer.

15. The method of claim 12, wherein the first layer has a thickness, and the second layer has a thickness, and the thickness of the first layer is less than the thickness of the second layer.

16. The method of claim 15, wherein the chamber has a thickness, and the thickness of the first layer is about 20% of the thickness of the chamber, and the thickness of the second layer is about 80% of the thickness of the chamber.

17. The chamber of claim 12, wherein the first layer and the second layer comprise a same high density polyethylene resin; or
wherein the first layer and the second layer comprise different high density polyethylene resins.

18. The chamber of claim 12, wherein the first layer comprises a blend of high density polyethylene resins.

19. The chamber of claim 18, wherein the blend of high density polyethylene resins comprises a first resin having a tensile yield strength of approximately 28 MPa and a flexural modulus of approximately 1,378 MPa and a second resin has a tensile yield strength of approximately 25 MPa and a flexural modulus of approximately 1,200 MPa.

20. The method of claim 12, wherein the first layer is positioned against a molding surface of the vacuum mold and the second layer is positioned away from the molding surface.
